# DEMANDE DE BREVET EUROPEEN

(11) **EP 2 141 390 A1**
(43) Date de publication de la demande: **06.01.2010**
(21) Numéro de dépôt: 09305585.3
(22) Date de dépôt: 23.06.2009
(51) Int. Cl.: F16H 61/32, F16H 63/38, F16H 37/04, F16H 59/70

(54) **Actionneur de passage de vitesses verrouillé dans ses positions centrale et extrêmes**

(30) Priorité: 01.07.2008 FR 0854434
(71) Demandeur: Renault s.a.s., 92100 Boulogne-Billancourt (FR)
(72) Inventeur: Raoul, Michel, 78990, ELANCOURT (FR)

(57) **Abrégé**

Actionneur électromécanique de passage de vitesses pour boîte de vitesses, comportant une unité motrice de passage (21) apte à déplacer en rotation un axe de commande interne de la boîte de vitesse (14) entre une position de repos stable et au moins une position de rapport engagé stable par l'intermédiaire de moyens de réduction de vitesse et de progressivité, caractérisé en ce la stabilité de ces positions est assurée par un système de billage fixe (10) coopérant avec un cran unique (26) dégagé dans la matière d'une pièce rotative (4) appartenant à la chaîne cinématique de transmission de mouvement entre l'unité motrice de passage (21), et l'axe de commande interne (14).

## Description

La présente invention propose un actionneur électromécanique pour boîte de vitesses robotisée.

Plus précisément, elle propose un actionneur électromécanique de passage de vitesses pour boîte de vitesses, comportant une unité motrice de passage apte à déplacer en rotation un axe de commande interne de la boîte de vitesse entre une position de repos stable, et au moins une position de rapport engagé stable, par l'intermédiaire de moyens de réduction de vitesse et de progressivité.

Cette invention trouve une application privilégiée, mais non exclusive, sur une boîte de vitesses robotisée à passages sous couple équipée de dispositifs de couplage de type coupleur conique auto-assisté, et d'un embrayage d'entrée, telle qu'illustrée par la publication WO 2007/128929)

Sans sollicitation extérieure, le coupleur conique décrit dans cette publication, est ouvert. Sa mise en action consiste à lui appliquer un effort extérieur permanent pendant la synchronisation, et pendant la transmission du couple moteur. Le pilotage est préférentiellement réalisé en effort, et une progressivité de la montée en effort est indispensable. Cette progressivité est assurée par l'actionneur du coupleur, grâce à un dispositif déformable, intercalé dans la chaîne d'application de l'effort de celui-ci.

On connait un actionneur approprié à la fermeture des coupleurs coniques, par la publication FR 2 813 935. Un tel actionneur est un multiplicateur de couple, et la démultiplication est obtenue à l'aide d'un engrenage de type roue et vis sans fin. Il est mécaniquement irréversible, mais son irréversibilité repose sur un médiocre rendement mécanique.

Cet actionneur est stable dans toutes les positions, mais les positions neutres et de verrouillage de vitesse, ne sont pas précises. Par ailleurs, en cas de défaillance du calculateur ou du système d'alimentation, lors d'un changement de rapport, l'actionneur restera dans une position qui peut correspondre à une position de fermeture partielle d'un ou deux dispositifs de couplage, qui peut conduire à la destruction de l'un ou des deux coupleurs, et même à la destruction de la boîte de vitesses.

Pour garantir un rendement énergétique optimum de la boîte de vitesses, il est nécessaire que l'actionneur, en dehors de ses périodes de travail (ouverture et fermeture des dispositifs de couplage) soit stable mécaniquement, et ne consomme pas d'énergie électrique. Au contraire, il doit avoir un rendement mécanique élevé, pendant ses périodes de travail.

Pour améliorer la sureté de fonctionnement de la boîte de vitesses et de ses composants, il est préférable d'avoir un actionneur qui relâche le dispositif de couplage.

La présente invention a pour but d'apporter une réponse à ces exigences, et propose un actionneur électromécanique, non pas irréversible, mais stable uniquement dans ses positions de rapport engagé et de neutre.

Dans ce but, elle propose que la stabilité de ces positions soit assurée par un système de billage fixe coopérant avec un cran dégagé dans la matière d'une pièce rotative appartenant à la chaîne cinématique de transmission de mouvement entre l'unité motrice de passage de l'actionneur, et l'axe de commande interne de la boîte.

De préférence, le cran est découpé dans la surface d'une roue d'entrée coopérant avec un pignon d'entrée entraîné par l'axe de sortie du moteur, et la roue dentée et le pignon d'entrée engrènent mutuellement par des dentures coniques.

Ces mesures sont garantes de la précision de la position neutre, car cette position est verrouillée par un billage, et de la réversibilité de toutes les positions intermédiaires.

Le retour en position neutre, ou vers le neutre est assuré par la détente des ressorts de progressivité en cas de coupure de courant.

Les positions de vitesse engagée sont également précises et mécaniquement stables, car elles sont verrouillées par le même billage que le neutre.

En position neutre, tout comme en position de vitesse engagée, l'actionneur se maintient en position stable sans consommation de courant, alors qu'il est instable et mécaniquement réversible entre celles-ci. Son rendement mécanique est donc élevé.

D'autres caractéristiques et avantages de la présente invention apparaîtront clairement à la lecture de la description suivante d'un mode de réalisation non limitatif de celle-ci, en se reportant aux dessins annexés, sur lesquels :
- la figure 1 est une vue en coupe verticale de l'actionneur dans le plan perpendiculaire au moteur, le doigt d'actionnement étant en position haute,
- la figure 2 est une vue en coupe verticale de l'actionneur dans le plan perpendiculaire au moteur, le doigt d'actionnement étant en position basse,
- la figure 3 est une vue en coupe verticale de l'actionneur dans le plan du moteur,
- la figure 4 est une vue de dessus de la roue conique et de la bille dans le cran de verrouillage, et
- la figure 5 montre le détail du billage dans son cran.

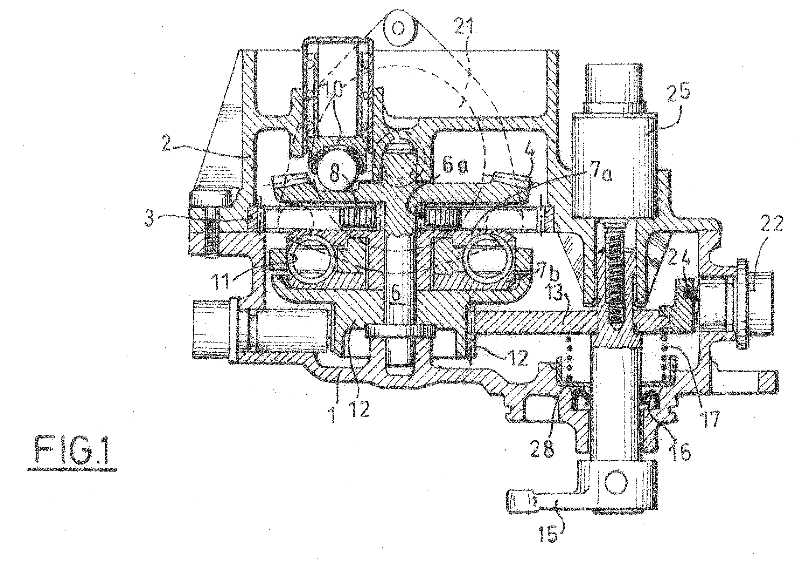

Sur la figure 1, on voit le carter 1 de l'actionneur proposé, et son couvercle de fermeture 2. Le couvercle 2 porte une couronne fixe 3, intervenant dans la réduction du mouvement d'entraînement pour le passage des vitesses, mouvement qui entre dans l'actionneur par une roue d'entrée conique 4.

A droite du schéma, apparaît le moteur de sélection des lignes de vitesses 6. Le mécanisme de réduction inclut deux flasques d'entrée 7a, 7b, et des satellites 8 (par exemple au nombre de trois). Un voile de sortie 9 est placé entre ces derniers. Un système de billage 10, est associé à la roue d'entrée 4. Le voile de sortie 9 reçoit des ressorts de progressivité 11, liés aux flasques 7a, 7b. Sous les flasques 7a, 7b, un pignon 12, est en prise avec un secteur d'entraînement 13 de l'axe de commande interne de commande des vitesses 14, de la boîte, qui porte un doigt d'entraînement 15. Le pignon de sortie 12 est guidé par l'axe de la roue d'entrée conique 4, et comporte une extension radiale 12a, terminée par des extensions axiales 12b formant des crans de liaison et d'entraînement par le voile 9.

Enfin, on a référencé un joint d'étanchéité 16 de l'axe 14 dans le carter, et le ressort de rappel en sélection 17 enroulé autour de l'axe 14.

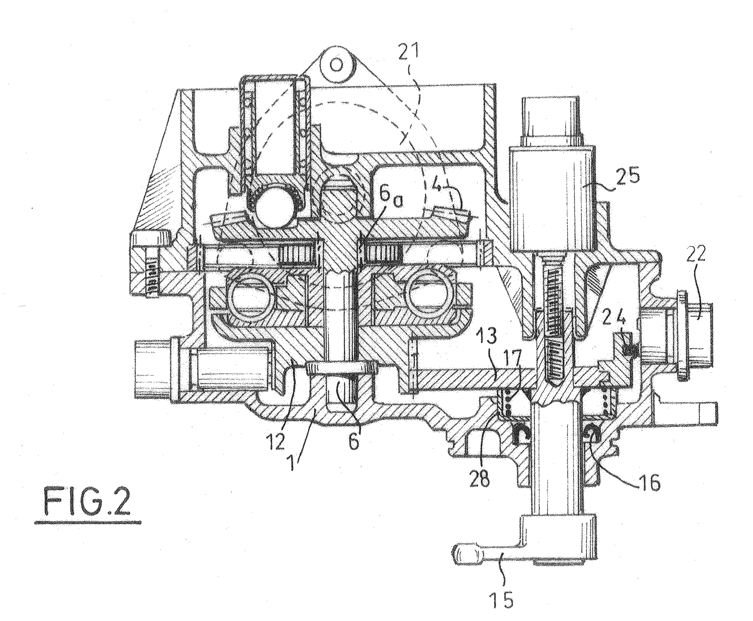

On retrouve les éléments mentionnés ci-dessus sur la figure 2, sur laquelle on a référencé en plus le capteur 18 et la cible de position angulaire 19 du doigt d'actionnement 15, qui peuvent être nécessaires pour piloter le doigt 15 en position, pour le passage de certains rapports, tels que la première ou la marche arrière. En passant de la figure 1 à la figure 2, l'axe de commande 14 est descendu en translation dans sa position basse (mouvement de sélection) sous l'action de l'unité motrice de sélection 25. A droite du schéma, on voit aussi le capteur de sélection 22 associé à l'axe de commande 14, et l'aimant 23 associé à celui-ci.

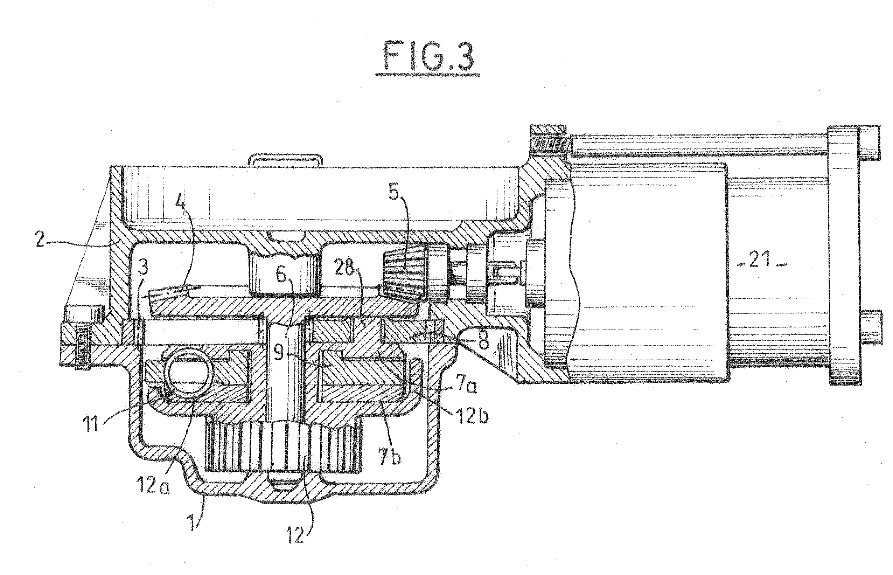

La figure 3 montre le moteur de passage 21 et le pignon conique 5 de sortie du moteur de passage 21, qui transmet le mouvement de celui-ci à la roue d'entrée conique 4 citée précédemment. La roue dentée et le pignon d'entrée engrènent ainsi mutuellement par des dentures coniques.

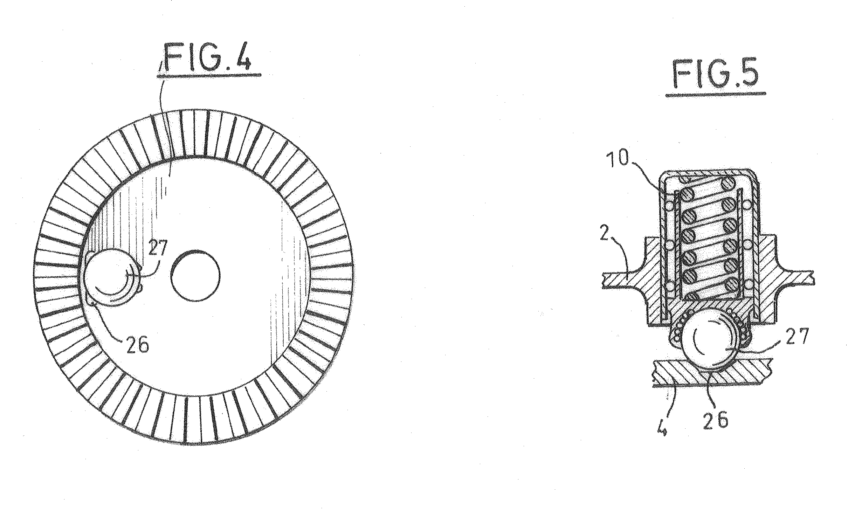

Enfin, les figures 4 et 5 se rapportent au système de billage 10. Elles montrent le cran 26 de la roue conique, qui reçoit la bille 27 du système 10.

En d'autres termes, l'actionneur électromécanique de passage de vitesses pour boîte de vitesses proposé, comprend une unité motrice de passage 24 apte à déplacer en rotation un axe de commande interne 14 de la boîte de vitesse entre une position de repos stable et au moins une position de rapport engagé stable par l'intermédiaire de moyens de réduction de vitesses et de progressivité.

Le carter 1 contient et soutient un mécanisme de transformation de mouvement constitué de divers engrenages cités ci-dessus, ainsi qu'un axe de sortie qui est l'axe de commande interne de la boîte 14, avec son doigt d'actionnement 15. L'axe 14 sélectionne les lignes de vitesses de la boîte lorsqu'il se déplace en translation sous l'impulsion du moteur de sélection 25, et passe une vitesse sur la ligne sélectionnée, lorsqu'il se déplace en rotation sous l'impulsion du moteur de passage 21. Le couvercle 2 referme le carter 1, soutient le mécanisme de transformation de mouvement à engrenages, supporte le moteur électrique de passage 21, le moteur électrique de sélection 25, et le ou système de billage 10 assurant le verrouillage en position de l'actionneur.

Le mécanisme de réalisation du mouvement, dit de passage, est à trois étages de réduction. Un premier niveau de réduction et de transformation de mouvement de rotation horizontal en un mouvement de rotation vertical est assuré par l'engrenage à renvoi conique 4, 5 : le pignon d'entrée 5 et la roue 4 effectuent cette transformation et cette réduction de vitesse, de l'ordre de cinq à sept.

Le second niveau de réduction est constitué d'un train épicycloïdal dont l'entrée de mouvement s'effectue par un planétaire, dont la denture 6a est taillée dans un axe 6 portant la roue d'entrée 4. Ce train assure une nouvelle réduction de l'ordre de six à huit, et comprend :
- une entrée de mouvement par le pignon planétaire 6a,
- une sortie de mouvement par le porte satellite 7a, 29 guidé par l'axe 6 portant la roue conique, et dont les axes 29 sont des excroissances du premier flasque d'entrée 7a, ou flasque 7a du dispositif de progressivité de l'actionneur, et
- un élément fixe constitué par une couronne 3, montée dans le couvercle 2 de l'actionneur.

Les moyens de progressivité de l'actionneur 7a, 7b, 11, 9, 12 sont guidés par l'axe 6 portant la roue conique d'entrée 4 et le pignon de sortie 12. Ils comprennent :
- un premier flasque d'entrée 7a, faisant office de porte-satellite,
- un second flasque d'entrée 7b, lié au premier 7a en rotation par des cannelures,
- les ressorts à boudins agencés 11 entre ces deux flasques 7a, 7b, et entraînés en rotation par ceux-ci,
- le voile 9 également agencé entre les flasques, centré sur le premier flasque 7a, et entraîné par les ressorts 11, et
- le pignon de sortie 12, également guidé par l'axe 6, comportant une extension radiale 12a terminée par des extensions axiales 12b, qui forment des crans de liaison et d'entraînement par le voile 9.

L'axe de commande interne de la boîte 14 (portant à son extrémité le doigt d'entraînement 15), porte dans sa partie centrale une collerette dentée 13 sur une partie de sa périphérie. La collerette 13 reçoit le mouvement du pignon de sortie 12 du dispositif de progressivité. Ce dernier engrènement constitue un troisième niveau de réduction à denture droite entre la sortie de l'ensemble de progressivité, et l'axe de commande interne de la boîte. Il apporte une multiplication complémentaire du couple de l'ordre deux fois, et permet au doigt de sortie, d'atteindre un niveau d'effort élevé.

Le système de réduction de mouvement à trois étages de l'actionneur, assure un rendement mécanique élevé, un comportement réversible et nécessite donc un moteur de capacité réduite.

Les mouvements de l'axe 14 et du doigt 15 sont réalisés à partir des moteurs de sélection 25 (translation) et du moteur de passage 21 (rotation). Le moteur de sélection 25 est porté par le couvercle 2. Son axe est fileté. Il coopère directement avec un filetage réalisé dans l'axe de sortie. Le ressort de rappel 17, prend appui en bas sur la rondelle 28, et en haut sur le secteur d'entraînement 13 rapporté sur l'axe de sortie, de manière à le repousser vers le haut en position stable.

Les déplacements du doigt de sortie 15 sont contrôlés de la façon suivante. Pour le déplacement en sélection, un aimant 23 porté par la collerette 13 sur l'axe 14, coopère avec des cellules hall appartenant à un capteur 22 supporté par le carter. Il y aura autant de cellules que de positions de sélection (2 dans le mode de réalisation présenté). Pour le déplacement angulaire (passage), un codeur 19 porté par le pignon de sortie du dispositif de progressivité coopère avec un capteur 18 adéquat supporté par le carter 1. Son installation sur le pignon de sortie permet de bénéficier de la multiplication du mouvement par la denture de sortie, et ainsi d'accroître le niveau de précision et de résolution du système de contrôle.

Pour assurer des positions précises et stables au neutre et en rapports engagés, l'actionneur comporte un billage 10 à haut rendement (du type utilisé en boîte manuelle à billage centralisé) fixé sur le couvercle. Ce système de billage 10 est fixe et coopère avec un cran unique 23 dégagé dans la roue d'entrée conique 4, donc dans une pièce rotative appartenant à la chaîne cinématique de transmission de mouvement entre l'unité motrice de passage 21 de l'actionneur, et l'axe de commande interne de la boîte 14.

Le cran 23 est creusé dans la roue 4. Il coopère avec le pignon d'entrée 5 entraîné par l'axe de sortie du moteur 21. Il détermine la position neutre et les positions vitesse engagée, par des tours complets de la roue 4, dans un sens ou dans l'autre. La course de la position neutre à la position de verrouillage d'un rapport est toujours un nombre de tours déterminé du moteur 21 (en rapport avec le ratio de l'engrenage conique 5, 4). Le passage de la position neutre aux positions de rapport engagé, ainsi que le retour à la position neutre à partir de celles-ci, s'effectuant donc par des tours complets de la roue d'entrée, le même cran de la roue d'entrée déterminant à lui seul l'ensemble de ces positions.

La sortie du neutre nécessite la rotation de la roue d'entrée d'une certaine valeur, et cette valeur est très inférieure à celle qui est nécessaire pour la mise en position de léchage du dispositif de couplage. Il faut noter également que l'entrée dans le cran (pour le verrouillage ou le retour au neutre) nécessite la même rotation que la sortie de celui-ci, en sens inverse.

Le maintien de la bille 27 dans le cran verrouillage est assuré uniquement par le billage 10, car ce dernier est dimensionné pour développer, au niveau de la roue conique 4, un couple qui est supérieur à celui des ressorts de progressivité 11 dans leur état de compression maximale (ce qui explique la difficulté à sortir du neutre et sa forte stabilité).

Toutefois, la sortie du cran verrouillage 26 ne requiert qu'une faible charge du moteur (différence entre les couples antagonistes des ressorts de progressivité et du billage), le moteur retenant ensuite la charge des ressorts. A ce sujet, l'implantation de la progressivité sur un étage intermédiaire, qui est réalisée selon l'invention, diminue d'autant la contrainte sur les ressorts. Le couple vu par les ressorts est, de ce fait, divisé environ par deux.

En résumé, l'actionneur proposé comporte un mécanisme de réduction de déplacement (multiplication de couple) à trois étages :
- un niveau d'entrée de transformation de mouvement de rotation horizontal en un mouvement de rotation vertical constitué d'un engrenage à renvoi conique 5, 4.
- un second niveau de réduction constitué d'un train épicycloïdal comprenant :
   i. une entrée de mouvement par le planétaire dont la denture 6a est taillée dans l'axe 6 portant la roue conique d'entrée 4,
   ii. une sortie de mouvement par le porte satellite 7a guidé par le même axe 6, et dont les axes 28 sont des excroissances du premier flasque 7a d'entrée du dispositif de progressivité, et
   iii. un élément fixe constitué par une couronne 3 montée dans le couvercle 2 de l'actionneur.
- un troisième niveau à denture droite entre la sortie d'un dispositif de progressivité et un axe de sortie portant un doigt d'actionnement.

L'ensemble de progressivité guidé par l'axe portant 6 la roue conique 4 et constitué :
a. d'un premier flasque d'entrée 7a faisant office de porte-satellite
b. d'un second flasque d'entrée 7b lié au premier en rotation,
c. de ressorts à boudins 11 agencés entre ces deux flasques et entraînés en rotation par ceux-ci,
d. d'un voile 9 également agencé entre les flasques 7a, 7b, centré sur le premier, et entraîné par les ressorts 11, et
e. d'un pignon de sortie 12 également guidé par l'axe 6 de la roue conique, comportant une extension radiale 12a terminée par des extensions axiales 12b formant des crans de liaison et d'entraînement par le voile.

Cet ensemble de progressivité est situé sur un étage intermédiaire, de l'actionneur, ce qui diminue d'autant la contrainte sur les ressorts.

Enfin, l'axe de commande interne 14, qui porte à son extrémité un doigt d'entraînement 15 (par exemple d'un crabot de fourchette de commande interne de boîte de vitesses), porte aussi, dans sa partie centrale, une collerette partielle dentée 13. Cette collerette, qui reçoit le mouvement du pignon de sortie 12, constitue un secteur d'entraînement de l'axe de commande 14.

Pour assurer les positions précises et stables au neutre et en rapport engagé, l'actionneur comporte, comme indiqué plus haut, un système de billage à haut rendement 10, fixé sur son couvercle 2. Ce billage coopère avec un cran unique 26 creusé dans la roue de couplage conique 4. Le cran 26 détermine la position neutre et, par un tour complet dans un sens ou dans l'autre, les positions de vitesse engagée.

## Revendications

1. Actionneur électromécanique de passage de vitesses pour boîte de vitesses, comportant une unité motrice de passage (21) apte à déplacer en rotation un axe de commande interne de la boîte de vitesse (14) entre une position de repos stable et au moins une position de rapport engagé stable par l'intermédiaire de moyens de réduction de vitesse et de progressivité, **caractérisé en ce** la stabilité de ces positions est assurée par un système de billage fixe (10) coopérant avec un cran unique (26) dégagé dans la matière d'une pièce rotative (4) appartenant à la chaîne cinématique de transmission de mouvement entre l'unité motrice de passage (21), et l'axe de commande interne (14).

2. Actionneur selon la revendication 1, **caractérisé en ce que** le cran (26) est creusé dans la surface d'une roue d'entrée (4) coopérant avec un pignon d'entrée (5) entraîné par l'axe de sortie du moteur (21).

3. Actionneur selon la revendication 1, **caractérisé en ce que** la roue dentée (4) et le pignon d'entrée (5) engrènent mutuellement par des dentures coniques.

4. Actionneur selon la revendication 1 ou 2, **caractérisé en ce que** le passage de la position neutre aux positions de rapport engagé ainsi que le retour à la position neutre à partir de celle-ci s'effectuent par des tours complets de la roue d'entrée (4), si bien que le même cran (26) de celle-ci détermine l'ensemble de ces positions.

5. Actionneur selon la revendication 2 3 ou 4, **caractérisé en ce que** le pignon d'entrée (5) et la roue dentée (4) constituent un premier étage de réduction de vitesse de l'unité motrice de passage (21).

6. Actionneur selon la revendication 5, **caractérisé en ce qu'**il comporte un second niveau de réduction constitué d'un train épicycloïdal dont l'entrée de mouvement s'effectue par un planétaire dont la denture (6a) est taillée dans un axe (6) portant la roue d'entrée (4).

7. Actionneur selon la revendication 6, **caractérisé en ce que** les moyens de progressivité (7a, 7b, 9, 11) sont guidés par l'axe (6) qui porte la roue d'entrée (4).

8. Actionneur selon la revendication 7, **caractérisé en ce que** les moyens de progressivité comprennent deux flasques d'entrée (7a, 7b) liés en rotation, des ressorts à boudins (11) agencés entre ces deux flasques et entraînés en rotation par ceux-ci, un voile (9) également agencé entre les flasques (7a, 7b), centré sur le premier (7a) et entraîné par les ressorts à boudins courbes (11), et un pignon de sortie (12).

9. Actionneur selon la revendication 8, **caractérisé en ce que** le pignon de sortie (12) est guidé par l'axe (4) de la roue d'entrée (4), et comporte une extension radiale (12a) terminée par des extensions axiales (12b) formant des crans de liaison et d'entraînement par le voile (9).
